# EUROPEAN PATENT APPLICATION

(11) **EP 4 554 035 A1**
(43) Date of publication of application: **14.05.2025**
(21) Application number: 24211510.3
(22) Date of filing: 07.11.2024
(51) Int. Cl.: H02J 3/38

(54) **GEN-SET TWIN SEQUENCING**

(30) Priority: 10.11.2023 US 202318506894
(71) Applicant: Cummins Power Generation Inc., Minneapolis, MN 55432 (US)
(72) Inventor: Mishra, Neha, 411014 Pune (IN); Ottikkutti, Pradheepram, Erie, 16511 (US); Bahulikar, Sunil Suryakant, 411038 Pune (IN); Joshi, Ajay Dattatraya, 411021 Pune (IN); Pandey, Amit K., 411028 Pune (IN)
(74) Representative: Cleveland Scott York

(57) **Abstract**

A method for energy control can include receiving an operating point of an energy conversion device at a telematics interface of a data processing system, the telematics interface configured to receive information from the energy conversion device. The method can include generating, by the data processing system, a digital twin of the energy conversion device, the digital twin having a virtual operating point. The method can include predicting, by the data processing system, a future load associated with the energy conversion device. The method can include modeling a predicted response to the future load based on the digital twin, the predicted response corresponding to the virtual operating point. The method can include conveying, to the energy conversion device via the telematics interface, an adjustment to the operating point of the energy conversion device based on the predicted response to the future load.

## Description

### TECHNICAL FIELD

The present disclosure relates generally to digital twins for engines and generators, and the employment thereof.

### BACKGROUND

Generator sets (also known as "gensets") may be employed for physical power production in a variety of applications (e.g., standby/backup power applications, etc.). A genset typically includes an engine and an alternator or other type of electric power generator coupled to the engine. The engine is structured to mechanically drive the alternator which, in turn, can produce electricity. The load demand of the genset, and performance of the genset can vary over time. For example, the genset performance can vary by step function changes responsive to applications of loads or startups/shutdowns of other gensets. Moreover, performance may vary (e.g., degrade) over time incident to wear, fatigue, filter obstructions, and the like.

### SUMMARY

One embodiment of the present enclosure relates to a method for energy control. The method can include receiving an operating point of an energy conversion device at a telematics interface of a data processing system, the telematics interface configured to receive information from the energy conversion device. The method can include generating, by the data processing system, a digital twin of the energy conversion device, the digital twin having a virtual operating point. The method can include predicting, by the data processing system, a future load associated with the energy conversion device. The method can include modeling a predicted response to the future load based on the digital twin, the predicted response corresponding to the virtual operating point. The method can include conveying, to the energy conversion device via the telematics interface, an adjustment to the operating point of the energy conversion device based on the predicted response to the future load.

In some embodiments, the energy conversion device comprises a genset and further comprising detecting, by the data processing system, a deviation between the operating point of the genset and the virtual operating point; and updating the digital twin of the genset based on the deviation.

In some embodiments, the method further includes identifying, based on the deviation, a degraded operation of the genset; determining, by the data processing system, an intervention associated with the degraded operation; and conveying, by the data processing system, a message indicative of the intervention.

In some embodiments, the method further includes initiating, based on the message indicative of the intervention, an action to automatically resolve the degraded operation.

In some embodiments, the method further includes receiving, from the telematics interface, additional operating points of each of a plurality of additional energy sources; and adjusting the operating point of the energy conversion device based on the additional operating points of the plurality of additional energy sources.

In some embodiments, the adjusting the operating point of the energy conversion device comprises engaging or disengaging the energy conversion device.

In some embodiments, the plurality of additional energy sources includes an energy storage device.

In some embodiments, the digital twin of the energy conversion device models a fuel use thereof, and the adjustment to the operating point is configured to reduce a fuel use of the plurality of additional energy sources.

In some embodiments, the digital twin of the energy conversion device includes a wear prediction therefor, and the adjustment to the operating point is configured to extend an operating life thereof.

In some embodiments, the adjustment to the operating point of the energy conversion device includes adjusting a power factor of a genset.

In some embodiments, the operating point comprises a voltage, frequency, and total power of a genset.

In some embodiments, the method includes presenting an indication of the adjustment to the operating point of the energy conversion device; and thereupon receiving an indication to apply the adjustment, wherein conveying the adjustment to the operating point is responsive to receiving the indication to apply the adjustment.

One embodiment of the present enclosure relates to a data processing system configured to interface with a genset. The data processing system can include a telematics interface configured to receive operating point data from a genset; and conveying an adjustment to the operating point of the genset. The data processing system can include a digital twin configured to generate first virtual operating point data based the operating point data received from the telematics interface; receive a load prediction for a load associated with the genset; model a genset transfer function corresponding to the genset and the load prediction; generate second virtual operating point data based on the genset transfer function. The data processing system configured to determine the adjustment to the operating point of the genset responsive to the second virtual operating point data.

In some embodiments, the telematics interface is configured to receive additional operating point data from an additional genset, and an additional digital twin corresponding to the additional genset, the additional digital twin configured to receive the load prediction; model an additional genset transfer function corresponding to the additional genset and the load prediction and; generate additional virtual operating point data based on the additional genset transfer function, wherein the adjustment is based on the additional virtual operating point data.

In some embodiments, the adjustment comprises engaging or disengaging the genset.

In some embodiments, the second virtual operating point data comprises a voltage, frequency, and power factor.

In some embodiments, the adjustment comprises a change to the power factor.

In some embodiments, the system includes a controller coupled with memory, the controller configured to determine that the operating point is indicative of degraded operation of the genset; determine an intervention associated with the degraded operation; and cause a message indicative of the intervention to be presented.

In some embodiments, the data processing system includes a controller coupled with memory, the controller configured to detect a deviation between the operating point of the genset and the first virtual operating point data or the second virtual operating point data; and update the digital twin of the genset based on the deviation.

One embodiment of the present enclosure relates to a non-transitory computer readable medium comprising instructions stored thereon, that when executed by a processor for a vehicle, cause the processor to receive an operating point for an energy conversion device. The instructions can cause the processor to generate a digital twin of the energy conversion device, the digital twin having a virtual operating point. The instructions can cause the processor to predict a future load associated with the energy conversion device. The instructions can cause the processor to model a predicted response to the future load based on the digital twin. The instructions can cause the processor to convey, to the energy conversion device, an adjustment to the operating point based on the predicted response to the future load. The instructions can cause the processor to detect a deviation between the operating point of the energy conversion device and the virtual operating point. The instructions can cause the processor to update the digital twin of the energy conversion device based on the deviation.

### BRIEF DESCRIPTION OF THE DRAWINGS

FIG. 1 is a block diagram of a data processing system, according to some embodiments.
FIG. 2 is a system diagram of a plurality of energy conversion devices, according to some embodiments.
FIG. 3 is an apparent power diagram along with a state diagram for a plurality of energy conversion devices, according to some embodiments.
FIG. 4 is a frequency and voltage diagram relative to a load, according to some embodiments.
FIG. 5 is a method of adjusting an operating point of an energy conversion device, according to some embodiments.
FIG. 6 is a method of updating a digital twin for an energy conversion device, according to some embodiments.
FIG. 7 is a block diagram illustrating an architecture for a computer system that can be employed to implement elements of the systems and methods described and illustrated herein.

### DETAILED DESCRIPTION

Following below are more detailed descriptions of various concepts related to, and implementations of methods, apparatuses, and systems for energy conversion device (e.g., genset) sequencing such as adjusting operating points, based on a digital twin. Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

Referring to the figures generally, the various embodiments disclosed herein relate to systems, apparatuses, and methods for generating or adjusting a digital twin to reflect the operation of a genset, or sequencing one or more energy conversion devices (e.g., the genset) based on the digital twin. A digital twin for the genset can operate based on a detected performance of the genset. For example, the digital twin can be updated based on a loss function between the digital twin and the genset. The digital twin can respond to predicted load changes, and can predict responses to load changes, or degradation of the genset. The digital twin can be employed to predict genset performance, and to adjust an operating point of the genset responsive to the predicted performance. A sequence may refer to a startup or shutdown (also referred to as an engagement or disengagement) of an energy conversion device such as a genset, or another adjustment such as an adjustment to an operating point thereof. For example, a power factor, voltage, frequency, gain, damping, or other characteristic of the genset may be adjusted as constituent portions of a sequence. A preventative or corrective maintenance may be performed incident to a sequence. The sequencing may be responsive to a predicted future load or a condition (e.g., wear or maintenance status) of a digital twin of the genset.

In some embodiments, multiple energy conversion devices (e.g., gensets, solar arrays, or energy storage devices such as batteries) may be included in a system, whereupon a data processing system can adjust the operating points of the various devices responsive to a state thereof. For example, a system including a battery can ramp a load applied to a genset gradually upon a load increase (sourcing energy from the battery) or ramp a load removed from the genset (sinking energy to the battery). Such an adjustment may be responsive to a state of charge of the battery and a predicted response of a digital twin to a predicted load. Likewise, a sequence can include multiple gensets wherein the data processing system starts and stops the gensets responsive to the predictive load and the operating point (e.g., fuel efficiency, carbon emissions, wear life or other operating fife).

The employment of the digital twin can simultaneously model a current state of equipment, which can reduce memory usage and overhead relative to other models. For example, employing a first model to predict wear life and a second model to determine a transfer function to a change in load may increase computer or memory usage relative to a single model. Moreover, since the digital twin can include similar inputs and outputs, the digital twin may be trained by back propagation by outputs available from a corresponding energy conversion device, which may reduce processing to determine model adjustments. The use of various digital twins corresponding to various energy conversion devices can detect variances in expected and actual operation within the population of energy conversion devices, such as according to a climate, operator, supplier sub-assembly, or the like. Thus, the physics-based replication of operation of an energy conversion device may increase a number of detection points for a deviation. For example, a virtual operating point can indicate a condition of the corresponding energy conversion device, as well as predict the operation of the energy conversion device with regard to various future loads.

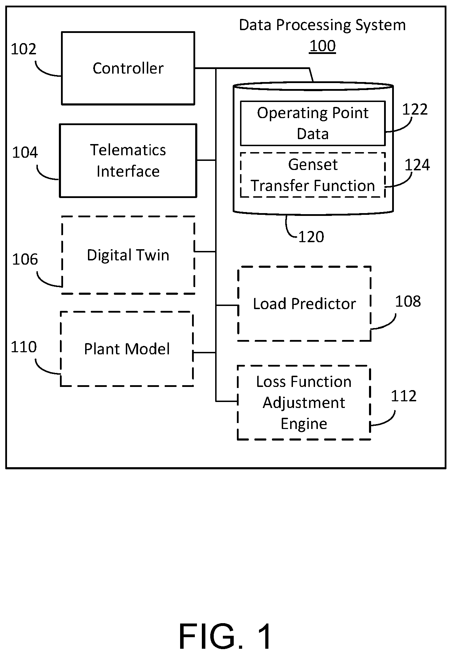

Referring to FIG. 1, a data processing system 100 includes or interfaces with a controller 102 to execute operations to perform the systems and methods described herein; a telematics interface 104 to exchange operating point data 122 with an energy conversion device or adjustments to the operating point; a digital twin 106 to model the operating point of the energy conversion device; a load predictor 108 to predict a future load applied to a system comprising at least one energy conversion device; a plant model 110 to depict a plurality of energy conversion devices such as various energy sources, sinks, storage devices, and so forth; and a loss function adjustment engine 112 to adjust the digital twin 106 responsive to observed operating points thereof. The data processing system 100 can include one or more servers, virtual machines, or other terminals and may be connected over a network.

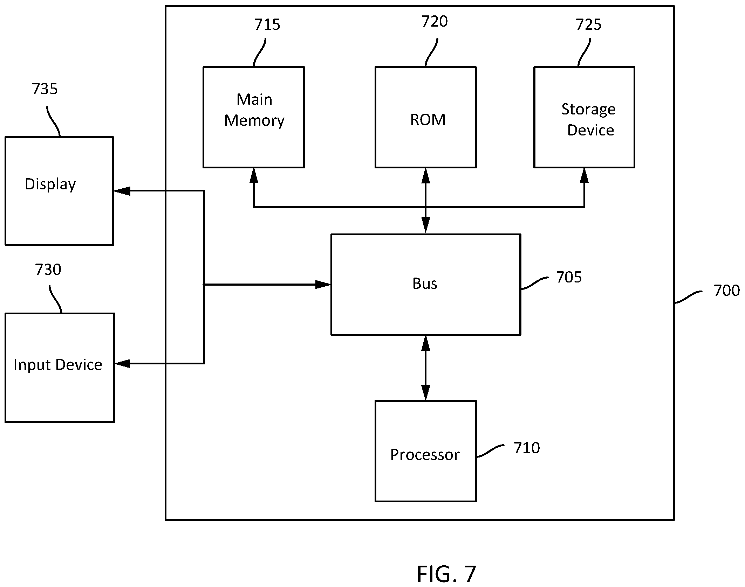

The controller 102, telematics interface 104, digital twin 106, load predictor 108, plant model 110, or loss function adjustment engine 112 can each include or interface with at least one processing unit or other logic device such as a programmable logic array engine, or module configured to communicate with a data repository 120 or database. The controller 102, telematics interface 104, digital twin 106, load predictor 108, plant model 110, loss function adjustment engine 112, or data repository 120 can be separate components, a single component, or part of the data processing system 100. The data processing system 100 and various components thereof can include hardware elements, such as one or more processors, logic devices, or circuits. For example, the vehicle can include one or more components or structures of functionality of computing devices depicted in FIG. 7.

The data repository 120 can include one or more local or distributed databases, and can include a database management system. The data repository 120 can include computer data storage or memory and can store one or more of operating point data 122 or genset transfer functions 124. The operating point data 122 can include operating points for gensets or other energy conversion devices including a voltage, frequency, current, power factor, service life for one or more components (e.g., wear life of moving parts, service life of filters, etc.), maintenance intervals, carbon intensity, energy efficiency, power output, fuel use, temperature, and the like. One skilled in the art will appreciate that various energy conversion devices may be associated with various operating point data 122. For example, a battery may be associated with a state of charge, cell temperature, or string voltage; a solar panel may be associated with a luminous intensity; and so forth. The genset transfer functions 124 can include a predicted or observed response to a load. For example, the genset transfer function 124 can include a change to operating point data 122 to a first energy conversion device responsive to a change in load, a change in operation of another energy conversion device, or so forth.

The data processing system 100 can include or interface with at least one controller 102. The controller 102 can include or interface with one or more processors and memory. The processor can be implemented as a specific purpose processor, an application specific integrated circuit (ASIC), one or more field programmable gate arrays (FPGAs), a group of processing components, or other suitable electronic processing components. The processors and memory can be implemented using one or more devices, such as devices in a client-server implementation. The memory can include one or more devices (e.g., random access memory (RAM), read-only memory (ROM), flash memory, hard disk storage) for storing data and computer code for completing the various operations described herein. The memory can be or include volatile memory or non-volatile (e.g., non-transitory) memory and can include database components, object code components, script components, or any other type of information structure for supporting the various activities and information structures of the present disclosure. The memory can be communicably connected to the processor and include computer code or instruction modules for executing one or more processes described herein. The memory can include various circuits, software engines, and/or modules that cause the processor to execute the systems and methods described herein, such as the portions depicted in FIG. 7, hereinafter.

The controller 102 is structured to control, at least partly, the operation of the data processing system 100 and associated systems, such as various energy conversion devices. The controller 102 can cause one or more operations disclosed, such as by employing another element of the data processing system 100. For example, operations disclosed by other elements of the data processing system can be initiated, scheduled, or otherwise controlled by the controller 102.

The data processing system 100 can include or interface with at least one telematics interface 104. The telematics interface 104 can include or be coupled with communications electronics. The communications electronics can conduct wired and/or wireless communications. For example, the communications electronics can include one or more wired (e.g., Ethernet, PCIe, AXI, or CAN) or wireless transceivers (e.g., a Wi-Fi transceiver, a Bluetooth transceiver, a NFC transceiver, or a cellular transceiver).

Communication between and among the components can be via any number of wired or wireless connections. In some embodiment, a controller area network (CAN) bus provides the exchange of signals, information, and/or information. The CAN bus includes any number of wired and wireless connections. The telematics interface 104 can be, include, or interface with one or more electronic control units (ECU). Because the telematics interface 104 is communicably coupled to the systems and components of FIG. 1, the telematics interface 104 is structured to exchange information with one or more of the components shown in FIG. 1,

The telematics interface 104 can receive real-time data at a periodic interval, or upon a change in excess of a change threshold. The telematics interface 104 can receive continuous or bursty information (e.g., responsive to an accumulation of information reaching a predetermined size for a data packet). The various information can include currency information such as a time stamp indicating a time of data capture, storage, or transmission. As used herein, real-time information may refer to information which is conveyed upon its generation or detection. One skilled in the art will realize that a currency of such real-time information may include, for example, sensor settling time, transmission time, or buffer delays which may contribute time delay (e.g., several seconds, or a few minutes) between a state of an energy storage device and the receipt of data, by the telematics interface 104. The telematics interface 104 can receive non-real time information such as maximum temperatures, hours of operation (e.g., in total, since a periodic maintenance or the like).

The telematics interface 104 can receive an identifier such as a unique identifier (e.g., serial number, media access control (MAC) address, or so forth). The telematics interface 104 can associate various received information with the identifier. The telematics interface 104 can associate various identifiers for devices associated with a location. For example, various gensets, solar arrays, batteries, and the like may be co-located or connected such that they may load balance there-between. The telematics interface can receive an indication that the various devices are in network communication. The telematics interface 104 can receive information for various devices via a connected device. For example, an energy conversion device, or a gateway therefor, can aggregate information of various devices. For example, a network can include a CAN network connected to various energy conversion devices wherein a gateway device may connect the CAN-connected devices with a data processing system over another wired or wireless connection (e.g., a cellular network or Ethernet). Thus, the data processing system may be in network communication with various devices based on a communications link to a fewer number of devices. The telematics interface can receive operating point data 122 via the network communication.

In some embodiments, the telematics interface 104 can be in network communication with a user interface such as a computer, mobile device, or so forth. The telematics interface 104 can convey a predicted adjustment to the user interface. In some embodiments, the user interface can present the predicted adjustment to a user or convey the predicted adjustment to a further device for implementation. In some embodiments, the telematics interface 104 is configured to receive a response to the predicted adjustment. For example, the telematics interface 104 can receive a response approving the adjustment, or a response to deny the change. In some embodiments, the telematics interface 104 can convey the adjustment to an energy conversion device in the absence of a detected response within a predetermined amount of time.

The data processing system 100 can include or interface with at least one digital twin 106. The digital twin 106 can model an operating point of a corresponding energy conversion device. For example, the digital twin 106 can include a physics-based model for lifing (e.g., determining a service life for, such as a service life of a filter, bearing, or lubricant) an energy conversion device or various components thereof (e.g., bearings, cylinder walls, fuel systems, cooling systems or so forth). The digital twin 106 can employ computational fluid dynamics (CFD), finite element modeling (FEM), and so forth. For example, the digital twin 106 can model the interactions of coolant or lubricants over various genset surfaces to determine wear, friction, or other characteristics of the energy conversion devices. Various characteristics of the digital twin 106 may be referred to as virtual operating points, and can include any operating point 122 of one or more modeled instances of an energy conversion device. The virtual operating point 122 can include information relevant to an energy conversion device or a digital twin 106 associated therewith. For example, the virtual operating point 122 can include a confidence interval for a prediction or iteration number for a model. The digital twin 106 can employ predictive or learning models based on previous device operation to predict operating point data 122. For example, the digital twin 106 can model metal fatigue or wear, filter life, or a transfer function 124 an energy conversion device such as a genset and a load. For example, such a transfer function 124 relate can a load change to an operating point of the genset including a voltage or frequency thereof. In some implementations, the digital twin 106 may be generated and/or otherwise implemented by the data processing system 100 (e.g., the controller 102). In some implementations, the digital twin 106 may be implemented as a data model or other type of data. In some implementations, the digital twin 106 may be stored in the data repository 120 and/or in another data storage device/computer or machine-readable storage medium.

The digital twin 106 can model various operating points or adjustments to the operation of the energy conversion device. For example, the digital twin 106 can operate in a first instance to model a transfer function 124 response to a continuing operation of a genset responsive to a continued load. The digital twin 106 can operate in a second instance to a predicted change in load received from the load predictor 108. In some embodiments, the digital twin 106 can operate in various instances responsive to various potential changes in load received from the load predictor. For example, the digital twin 106 can operate in instances operating with various power factors, various startup times, or the like.

The digital twin 106 can model degradation of energy conversion devices. For example, the digital twin 106 can include models of serviceable life of various parts (e.g., estimates of remaining life or probabilistic models of a failure within a future time period). The digital twin 106 can include a change in performance related to the degradation. For example, responsive to a degradation of a bearing of filter, the digital twin 106 may indicate a lower power output, higher thermal value, or otherwise include operating point 422 data based on the degradation.

The data processing system 100 can include or interface with at least one load predictor 108. The load predictor 108 can provide a prediction of future demand. For example, the load predictor 108 can estimate a future demand based on non-explicit data (e.g., the weather, a cycle time of an industrial process, a condition of an energy grid such as a voltage, frequency, demand data (e.g., price data), a demand reduction event, or the like. The load predictor 108 can estimate a future demand based on explicit data such as a receipt of a message indicating a request to engage a load device, in conveying a pending application of a load, or shutdown of another energy conversion device such as a gen-set. For example, the load predictor 108 can predict a supply or demand of energy incident to a pattern or a particular event.

The load predictor 108 can predict a load applied to a particular energy conversion device. For example, a plant can include a primary or sole energy conversion device, or load predictor 108 can employ a plant model to predict a change in a load applied to a particular energy conversion device based on a predicted input to a plant. In some embodiments, the load predictor 108 can predict a total load for a plant, and the plant model can thereafter determine a load for a particular energy conversion device. The digital twin 106 can receive one or more predicted loads from the load predictor 108 or the plant model 110.

The data processing system 100 can include or interface with at least one plant model 110. The plant model 110 can comprise various energy sources, sinks, storage devices, and so forth. For example, a plant model can include at least one device configured to source energy (e.g., a genset, battery, solar array, or micro-grid), and at least one device configured to sink energy (e.g., a battery, microgrid, industrial, commercial, or residential electrical equipment). One or more devices of the plant model 110 can include a digital twin 106 or other model therefor, such that upon an indication, from the load predictor 108, that a change in load demand within or external to the plant may change, the plant model 110 can model a response of the plurality of devices. For example, responsive to a non-operational period of a grid, the plant model 110 can include a decrease in an energy sink (e.g., compressors of a climate control system may shutdown). The genset can startup and, thereupon, a load may be applied to the output. In some plants, an energy storage device such as a battery can provide power to some or all energy sinks during the genset startup.

The plant model 110 can include a control interface for various sources or sinks. For example, the plant model can control an energy sink responsive to an available source, or control an energy source responsive to a predicted load demand. The plant model 110 can determine load predictions according to an iterative process.

The data processing system 100 can include or interface with at least one loss function adjustment engine 112. The loss function adjustment engine 112 can detect and adjust either of the digital twin 106 models or the plant models 110 based on a difference between a predicted response to a change in load and a measured change in load. The difference can relate to an instantaneous operating point (e.g., temperature, power output, fuel use, etc.). The difference can relate to an change over time of an energy conversion device (e.g., degradation). For example, the difference can describe metal wear, filter life, the effects of thermal properties of coolants or lubricants, or so forth (e.g., a wear life at one or more temperature can be adjusted upwards or downwards). The loss function adjustment engine 112 can run in a non-real time mode. The digital twin 106 or other model can be operated under conditions previously detected by an energy conversion device, and a performance of the energy conversion device can be compared to the performance of the digital twin 106 or other model. For example, following a change in load or an operating period, the fuel use, coolant or lubricant temperature can be compared to a measured value, and a physics based model can be updated based on a loss function (e.g., cross-entropy loss, Huber loss, mean-squared error, hinge loss, etc.). Thus, the performance of the digital twin 106 or other model may better predict the performance of an energy conversion device for future operation.

The loss function adjustment engine 112 can determine changes on an individual unit-basis, or for a set of energy conversion devices. For example, the loss function adjustment engine 112 can determine a difference for a particular genset based on a serial number thereof, or for a model number, machine type, or other identifier (e.g., time or location of manufacture, customer site, environmental conditions, etc.). For example, the loss function adjustment engine 112 can determine a difference between a predicted and measured operating point for various gensets, apply first updates to each genset, and a second update to a class of gensets (e.g., the loss function adjustment engine 112 can apply first updates of a wear factor to three gensets from a normalized value such as 1.0 to, for example, 1.2, 1.15, and 1.3; and can apply an update to a model of about 1.2).

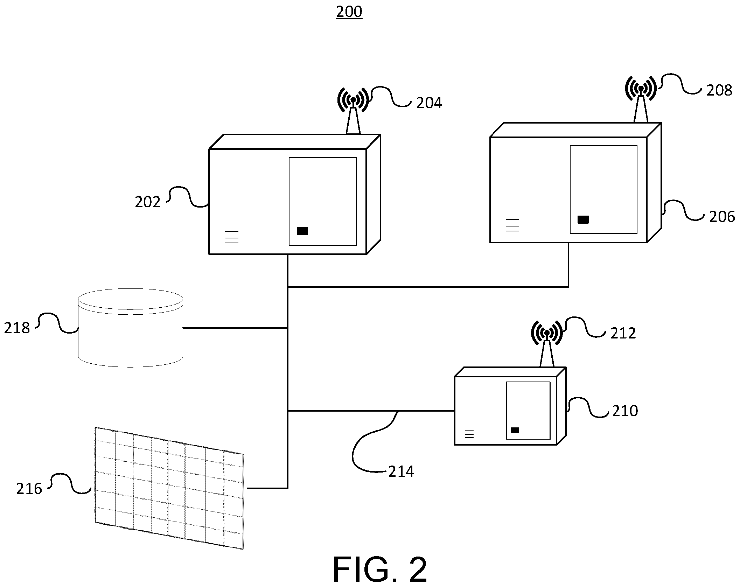

Referring now to FIG. 2, a system diagram of a plurality of energy conversion devices is provided, according to some embodiments. A first genset 202 having a first transceiver 204 connected thereto is electrically connected to a second genset 206 having a second transceiver 208, and a third genset 210 having a third transceiver 212. As indicated above, some transceivers may be omitted in various embodiments (e.g., the second transceiver 208 and third transceiver 212 may be omitted and routed through the first transceiver 204 or another gateway). An electrical interconnect 214 joins the various energy conversion devices. For example, the electrical interconnect 214 can connect the devices to each other or to a grid (e.g., a micro-grid). The electrical interconnect 214 can include or parallel a communications network such as a CAN Ethernet, or other communications network between one or more of the depicted energy conversion devices. The electrical interconnect 214 can include bus bars, wiring, or the like. The electrical interconnect 214 can convey electrical energy between the depicted energy conversion devices and various energy sinks or further sources.

A solar array 216 or other energy source of a grid can connect to the electrical interconnect 214. For example, the various gensets may opportunistically decrease energy produced based on an energy output of a variable renewable source. The data processing system 100 can sequence the changes in operation points of the gensets, such as startup or shutdown, or an amount of energy produced by each genset to reduce energy use, increase genset life, maintain a maintenance interval, or so forth. An energy storage device 218 such as a battery or fuel cell is connected to the electrical interconnect 214. The battery can convert received electrical energy to chemical energy for storage and thereafter convert the chemical energy to electrical energy (e.g., during genset startup, responsive to bursty loads, etc.), so as to time-shift demand. The data processing system 100 can adjust a mode of operation (e.g., charging or discharging) of the energy storage device 218 to reduce energy use, increase genset life, maintain a maintenance interval, or so forth.

It should be understood that the devices shown in the example implementation of FIG. 2 are provided solely for purposes of illustration, and in other embodiments, other types of devices could be used in conjunction with the features of the present disclosure. In some implementations, features described herein could be used with other types of renewable or non-renewable energy storage devices. In some implementations, features described herein could be used with systems such as vehicles. All such implementations are contemplated within the scope of the present disclosure.

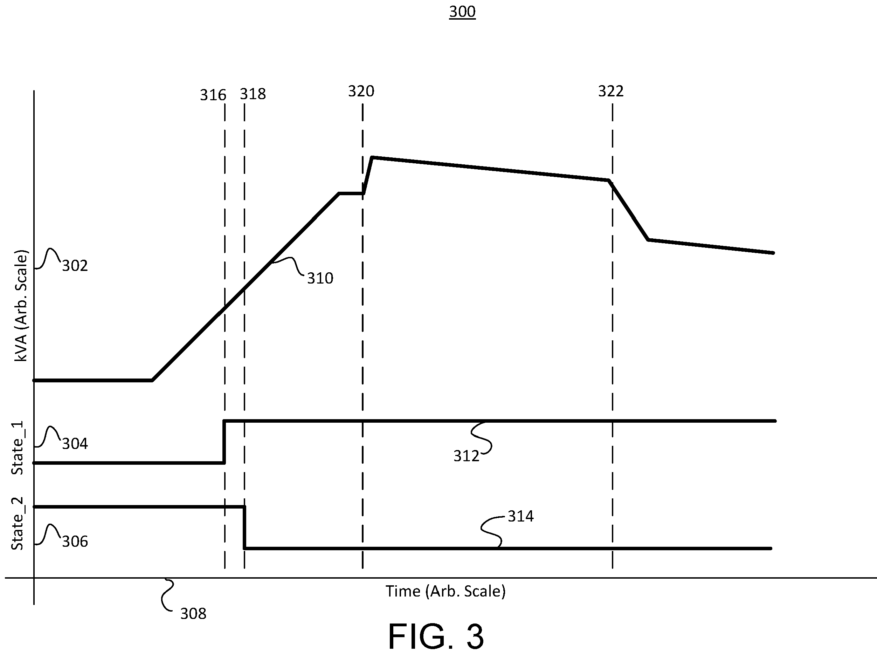

Referring now to FIG. 3, an apparent power diagram 300 is provided along with a state diagram 304, 306 for a plurality of energy conversion devices, according to some embodiments. The apparent power diagram 300 depicts an apparent power demand 310 longitudinally over a time axis 308. For example, at an initial time, the state of a first genset 312 (or other energy storage device) is depicted as off. The state of a second genset 314 (or other energy storage device) is depicted as on. The data processing system 100 can control the state based on the apparent power demand 310. At an initial time, the off state of a first genset 312 and on state of the second genset 314 can lower fuel use, emissions, or increase power availability, relative to other states. For example, simultaneous operation of both genets may use excessive fuel, and simultaneous non-operation of both gensets may not provide adequate power. Such states may correspond to a desired wear pattern. Desired wear patterns may minimize maintenance requirements, downtime, overall cost, or stagger maintenance between various energy storage devices such that a probability of a simultaneous need for corrective or preventative maintenance is reduced.

The apparent power demand begins to increase prior to a first time 316, at which the data processing system conveys and indication to adjust the operation of the state of the first genset 312 and the state of the second genset 314. For example, the load predictor 108 can provide an indication that the load will continue to increase whereupon the controller 102 can determine that the state of the second genset 314 should be enabled. The controller 102 can cause the telematics interface 104 to convey a first indication to adjust the state of the first genset 312 (e.g., startup the first genset) at the first time 316. The controller 102 can cause the telematics interface 104 to convey a second indication 318 to shut down the second genset at a second time 318. For example, the controller 102 can cause the telematics interface 104 to convey a single message indicating the startup and shutdowns or separate messages corresponding to the first time 316 and second time 318. The power factor of the first or second genset can be adjusted during the transition about the first time 316 and second time 318 as is further described henceforth (e.g., responsive to an increase of load seen by the first genset and a decrease of load seen by the second genset).

At a third time 320, the load predictor 108 can provide an indication of an abrupt increase in load demand 108. For example, the abrupt increase may correspond to a startup of direct current (DC) motor, or a transient load such as a charging of a capacitor bank. The controller can determine, according to a genset transfer function 124, that the application of the load may result in a voltage or frequency sag below a predefined threshold. For example, the load increase can be applied to a digital twin 106 of the second generator, which may exhibit said voltage sag. Responsive to the predicted sag, the controller 102 can convey, via the telematics interface 104, a message to adjust the operation of the genset. For example, the genset can cause the controller to adjust a power factor of operation. Such an adjustment may decrease an operating efficiency of the genset, increase ohmic losses due to reactive current, and so forth. Thus, it may be desirable to limit the adjustment to a window prior and subsequent to the load demand. For example, the genset can operate at a power factor of about 0.9 prior to receiving an indication, and thereafter adjust a power factor to 0.75 prior to the change in load, which may reduce a magnitude of a voltage sag responsive to a load step (e.g., according to a transfer function 124). At a time after receiving the load change, the genset can return to operation at a higher power factor (e.g., 0.8, 0.9, or the like). The power factor can be adjusted to realize a desired total power (e.g., an apparent and real power). The time after the load change may be predetermined or based on a response of the digital twin 106 or genset (e.g., a return of voltage or frequency to a predefined threshold).

At a fourth time 322, the predicted load sharply decreases. Such a sharp decrease may correspond to an increase in voltage of a the first genset. The controller 102 can convey, via the telematics interface 104, a message to adjust the operation of the genset. For example, the genset can cause the controller to adjust a power factor of operation to decrease a power factor during or prior to the decrease such that a voltage or frequency regulation to the load change may be improved (e.g., damped, reduced in duration, etc.). In various embodiments, a voltage or frequency may be adjusted in addition to or instead of a power factor adjustment. For example, responsive to an indication, from the digital twin, of a sag or overshoot, the data processing system 100 can convey a message, via the telematics interface 104, to increase a voltage or frequent of operation.

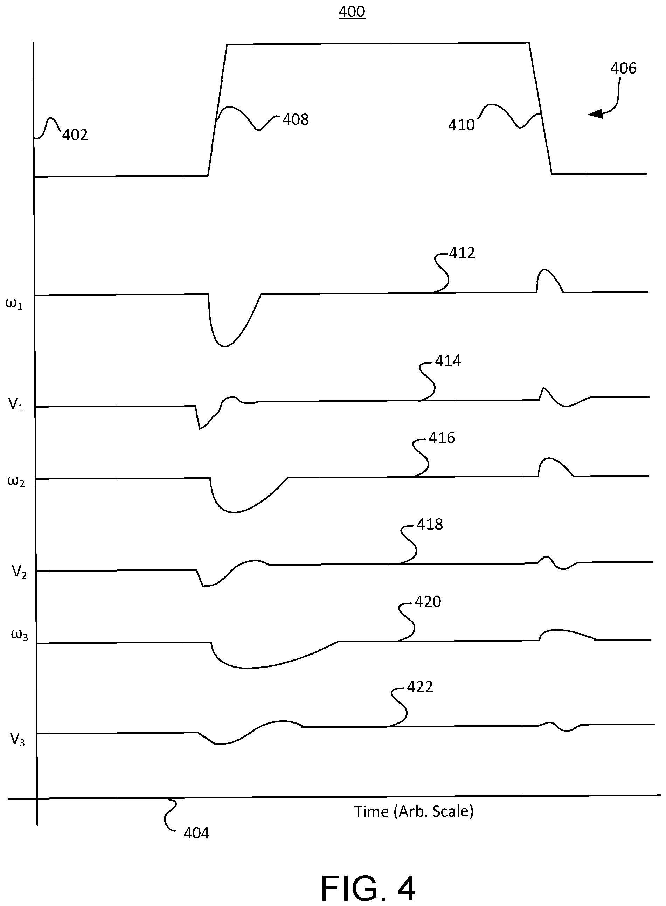

Referring now to FIG. 4 a frequency and voltage diagram 400 is provided as relative to a load profile 406, according to some embodiments. The load profile 406, along with various voltages and frequencies are provided according to an arbitrary magnitude axis 402 centered about each of the depicted signals. For example, the median voltages and frequencies can be centered about a same arbitrary voltage and frequency. Various voltages, frequencies, and the load profile 406 are provided relative to a same time axis 404.

The load profile 406 can include a zero or nonzero initial value before stepping up at a first load-step application 408, and thereafter decreasing at a second load step application 410. Various voltages and frequencies corresponding to various adjustments of a corresponding genset or digital twin 106 are provided. For example, the depicted voltage and frequency signals can corresponds to various instances of a digital twin 106 for a genset.

A first frequency signal 412 and first voltage signal 414 correspond to a first instance of a digital twin 106 responding to the application of the load profile 406. A second frequency signal 416 and second voltage signal 418 correspond to a second instance of a digital twin 106 responding to the application of the load profile 406. A third frequency signal 420 and third voltage signal 422 correspond to a third instance of a digital twin 106 responding to the application of the load profile 406. Each instances may represent increased levels of damping in response to abrupt changes of the load profile 406. For example, the first through third instances may exhibit increasing power factors (e.g., 0.9, 0.8, 0.5) or an output filter to transient responses (e.g., loading). One skilled in the art will appreciate that the depicted magnitude of voltage may refer to an RMS voltage for various signal types including an alternating current (AC) (e.g., three-phase) signal.

As depicted, at a load increase time 424 corresponding to the first load-step application 408, the various voltage and frequency signals decrease in magnitude as the increased counter electro-magnetic force is applied to the genset. Conversely, at a load decrease time 426, the various voltage and frequency signals increase in frequency, as the inertial and inductive forces continue to generate a electro-magnetic force before ramping down. The increases or decreases in the signals can return to the mean. In some embodiments, the signals may follow a damped sinusoid to return to the median. The damped-ness of the function may vary such that overdamped functions may filter the changes, but may take a longer time to return to steady state operation. Underdamped functions may exceed a desired deviation between steady state operation and an excursion therefrom.

Particularly, the first voltage signal 414 and first frequency signal 412 may deviate from an initial position a greater magnitude than is desired (e.g., greater than a predetermined threshold). The third voltage signal 422 and third frequency signal 420 may deviate from an initial position less than a than a desired amount, but may continue to deviate longer than a desired time (e.g., may be underdamped), which may lead to instability according to some load profiles 406. The second voltage signal 418 and third frequency signal 416 may deviate an amount which is less than a maximum desired amount, for a time that is less than a desired amount. The data processing system 100 can convey an indication to cause an adjustment of the genset according to the same operating points 122 as the second instance of the digital twin 106, such that a same or similar transfer function may be realized by a genset as modeled by the digital twin 106.

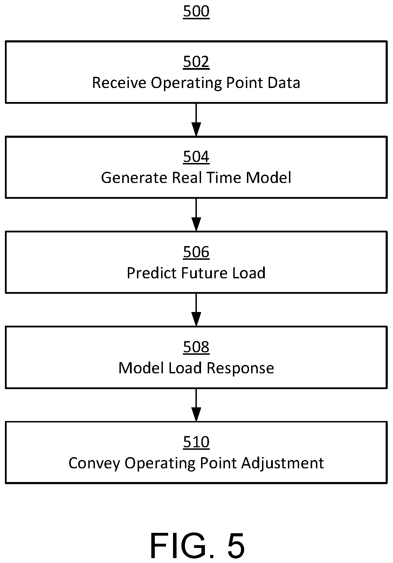

Referring now to FIG. 5, a method 500 of adjusting an operating point of an energy conversion device is provided, according to some embodiments. In brief summary, the data processing system 100 receives operating point data 122 at operation 502. At operation 504, the data processing system 100 generates a digital twin 106 based on the operating point data 122. At operation 506, the data processing system 100 can predict a future load. At operation 508, the data processing system 100 can model a load response to the predicted load. At operation 510, the data processing system can convey an operating point adjustment to an energy conversion device.

Referring again to operation 502, the data processing system 100 receives operating point data 122. The operating point data 122 may represent one or more operating points of the energy conversion device received at the telematics interface 104 of the data processing system 100. The operating point data 122 can be data of energy conversion devices such as gensets. The operating point data 122 can include real time operating data such as a voltage, frequency, temperature, or power factor. The operating point data 122 can correspond to various sensors coupled to the energy conversion device. The operating point data 122 can include real time data, which can include periodic updates of the operating point data such periodic updates may be referred to collectively as a real time data stream. The data processing system 100 can receive event based data or historical data such as maintenance records, installation dates, serial numbers, or so forth. Referring again to operation 504, the data processing system 100 generates a digital twin 106 of the energy conversion device based on the operating point data 122. The digital twin 106 can be or include one or more machine learning models, which can include physics based models, which may predict operating points such as by adjusting the model based on operating point data 122 received from the energy conversion device.

Referring again to operation 506, the data processing system 100 predicts a future load associated with the energy conversion device. The prediction of the future load may be responsive to an indication of a startup of equipment of another sink (e.g., from an industrial control system, an HVAC system, or so forth). The prediction may be responsive to a receipt of a load forecast. The prediction may be for a particular energy conversion device, or for a plant including the energy conversion device. For example, the prediction can be responsive to a proposed adjustment (e.g., shutdown) of another energy conversion device. In some embodiments, multiple predictions can be made such that the data processing system 100 can determine a response to the various predictions (e.g., across a range of predicted future demand).

Referring again to operation 508, the data processing system 100 models a predicted response to the future load based on the digital twin, the predicted response corresponding the virtual operating point. The load response can include operating point data 122 such as voltage, frequency, fuel use, carbon intensity, component wear or life, and the like. The operating point data 122 can be associated with a weight, such that a cost function can be associated with the various operating point data 122. For example, a cost function can include one or more operating point data points, such as to minimize total fuel use of for one or more energy conversion devices, or various operating point data points, such as to determine a cost function based on a frequency change, voltage change, fuel use, coolant temperature, lubricant temperature, or so forth which can each include a weight such that the cost function can determine a load response associated with a lowest cost.

Referring again to operation 510, the data processing system 100 conveys, via the telematics interface, an adjustment to the operating point of the energy conversion device based on the predicted response to the future load. The data processing system 100 can convey the operating point adjustment responsive to the modeled load response of operation 508 without user intervention (e.g., automatically). The data processing system 100 can convey the operating point adjustment to a user (e.g., may cause the operating point adjustment to be presented by a user interface). The data processing system 100 can receive a response to the conveyance of the operating point adjustment, or determine an elapsed time without a response (e.g., a time-out) to said conveyance, and convey the operating point adjustment to the energy conversion device upon the receipt of a response to the conveyance, or the expiry of the time-out. The adjustment can include, for example, a startup or shutdown of the energy conversion device, a change to a power factor, voltage, or frequency, or a schedule for preventative or corrective maintenance. The operating point adjustment can include an action to resolve a degraded state of operation, such as shutting down an energy conversion device, scheduling a maintenance, or engaging a coolant pump. Degraded operation may refer to an operating point of an energy conversion device which is wearing over time indicative of a need for service, which may or may not result in a change to the output voltage, frequency, current, power factor, or the like for the energy conversion device.

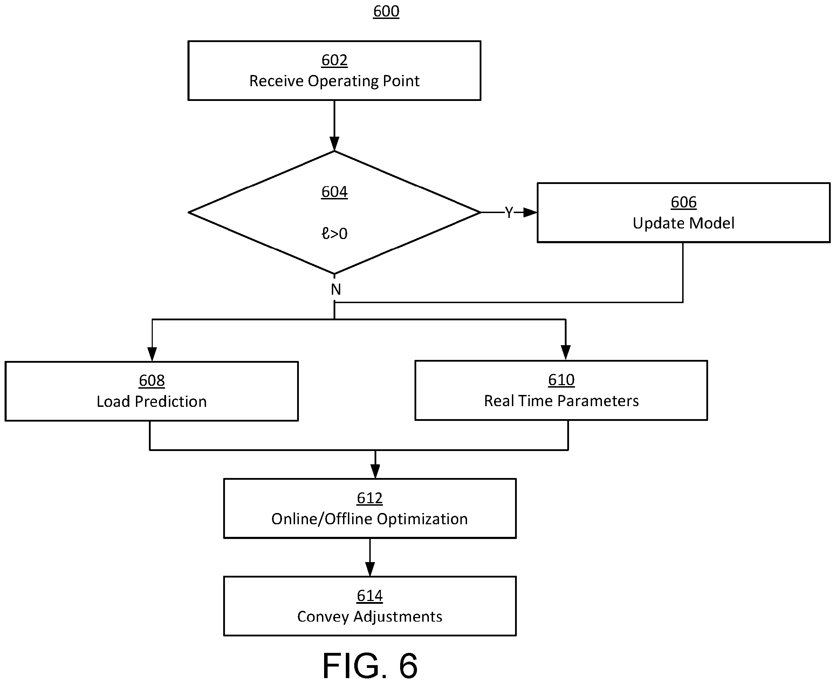

Referring now to FIG. 6, a method 600 of updating a digital twin for an energy conversion device is provided, according to some embodiments. In brief summary, the data processing system 100 receives operating point data 122 at operation 602. At operation 604, the data processing system 100 compares the operation of the operating point data of an energy conversion device to an operating point of a digital twin 106 associated therewith. At operation 606, the data processing system 100 updates a model for the digital twin 106 responsive to a determination that the operating point of the digital twin 106 diverges from the operating point of the energy conversion device. At operation 608, the data processing system 100 can predict a future load. At operation 610, the model generates operating point data 122. At operation 612, the data processing system conducts online/offline optimization. At operation 614, the data processing system 100 can determine and convey adjustments to cause a change of operation of a genset based on the real time parameters.

Referring again to operation 602, the data processing system 100 receives operating point data 122 from a genset. The operating point data 122 can refer to any operating point data 122 of the present disclosure including, for example, the operating point data 122 particularly disclosed at operation 502 of the method 500 of FIG. 5. Referring again to operation 604, the data processing system 100 compares the operation of the operating point data of an energy conversion device to an operating point of a digital twin 106 associated therewith. For example, the data processing system 100 can determine (e.g., detect) a divergence between the operation of the energy conversion device and a corresponding digital twin 106. The divergence can be detected by a loss function, ℓ (e.g., such that the loss function, ℓ is associated with a non-zero value). In some embodiments, the data processing system 100 can compare a deviation (e.g., a magnitude of a loss function value) to a non-zero value. For example, deviations which do not exceed a magnitude threshold, persist for longer than a temporal threshold, or so forth may not be indicative of an update to the model. This is, the deviations can be filtered which may prevent overfitting of digital twins 106. Responsive to a divergence larger than a threshold (e.g., a zero or non-zero threshold), the method 600 can proceed to operations 606; responsive to a divergence which is not larger than a threshold, the operation can proceed to at least one of operations 608 or 610.

Referring again to operation 606, the data processing system 100 updates a model for the digital twin 106, which may be based on the deviation. For example, the data processing system 100 can update a digital twin 106 to reduce a difference between the operating point of the energy conversion device and the virtual operating point of a corresponding digital twin 106. The update can be for the particular digital twin 106 corresponding to the energy conversion device or can be to a class of digital twins corresponding to a class of energy conversion devices. For example, the digital twin 106 can include one or more machine learning models employed to model a physics-based operation of the energy conversion devices. The updates to the energy conversion device can employ at least a portion of operating point data 122 received from the energy conversion device to retrain the various models to better reflect the operating point data. For example, a first portion of operating point data can be employed to train a model, and a second portion of the operating point data can be employed to validate the changes to the model. The model updates may occur in a non-real time operation, such as an operation which includes substantial processing occurring in batches, or which consolidates operating point data for multiple energy conversion devices to determine the model updates according to a periodic update (e.g., monthly, upon a receipt of a change exceeding a change threshold, or upon a validation of the change to a predetermined threshold). Responsive to an update applied to the digital twin, the method can proceed to each of operations 608 and 610.

Referring again to operation 608, the data processing system 100 predicts a future load. For example, the prediction can include various predictions employed at operation 506 of the method 500 of FIG. 5, or otherwise disclosed herein. Referring again to operation 610, the data processing system 100 generates operating point data 122. For example, the operating point data 122 can be real time information to predict a current state of the machine, or a change in operation in the future. For example, the operating point data 122 can include real-time parameters for the energy conversion device which are predictive of a future current or future operating point data. In some embodiments, the operating point data 122 can correspond to a digital twin 106 operating at faster than real-time rate such that a future divergence of the operating point of the energy conversion device can be predicted (e.g., twice real time speed, ten times real time speed, or the like). For example, the digital twin 106 can run to a virtual failure mode. In some embodiments, various instances of the digital twin can be generated, corresponding to a range of predicted loads or a range of predictions of a model (e.g., a high-wear model, moderate-wear model, and low-wear model).

Referring again to operation 612, the data processing system 100 can perform online or offline optimization. Online optimization may refer to changes to an operating point of a digital twin which is adjusted corresponding to a potential adjustment for the digital twin such that a transfer function can be estimated or determined. The result of the optimization can thus be predicted (e.g., confirmed) by the operation of the digital twin 106, such as prior to operation 614. Offline optimization may refer to an adjustment to an operation of one or more loads or energy conversion devices which is not based on a real-time model. For example, the offline optimization can include a change to a model of a digital twin. The optimization can include an intervention which can be responsive to degraded operation of the genset, which is identified based on the deviation. The data processing system can convey a message indicative of the intervention.

Referring again to operation 614, the data processing system 100 determines and conveys adjustments to cause a change of operation of an energy conversion device based on the real time parameters. For example, the data processing system 100 can convey adjustments as described with regard to, for example, operation 510 of the method 500 of FIG. 5, or otherwise disclosed herein.

FIG. 7 is a block diagram illustrating an architecture for a computer system that can be employed to implement elements of the systems and methods described and illustrated herein. The computer system or computing device 700 can include or be used to implement a controller 102 or its components, and components of the vehicle. The computing system 700 includes at least one bus 705 or other communication component for communicating information and at least one processor 710 or processing circuit coupled to the bus 705 for processing information. The computing system 700 can also include one or more processors 710 or processing circuits coupled to the bus for processing information. The computing system 700 also includes at least one main memory 715, such as a random access memory (RAM) or other dynamic storage device, coupled to the bus 705 for storing information, and instructions to be executed by the processor 710. The main memory 715 can be used for storing information during execution of instructions by the processor 710. The computing system 700 can further include at least one read only memory (ROM) 720 or other static storage device coupled to the bus 705 for storing static information and instructions for the processor 710. A storage device 725, such as a solid state device, magnetic disk or optical disk, can be coupled to the bus 705 to persistently store information and instructions (e.g., for the data repository 120).

The computing system 700 can be coupled via the bus 705 to a display 735, such as a liquid crystal display, or active matrix display. An input device 730, such as a keyboard or mouse can be coupled to the bus 705 for communicating information and commands to the processor 710. The input device 730 can include a touch screen display 735.

The processes, systems and methods described herein can be implemented by the computing system 700 in response to the processor 710 executing an arrangement of instructions contained in main memory 715. Such instructions can be read into main memory 715 from another computer-readable medium, such as the storage device 725. Execution of the arrangement of instructions contained in main memory 715 causes the computing system 700 to perform the illustrative processes described herein. One or more processors in a multi-processing arrangement can also be employed to execute the instructions contained in main memory 715. Hard-wired circuitry can be used in place of or in combination with software instructions together with the systems and methods described herein. Systems and methods described herein are not limited to any specific combination of hardware circuitry and software.

Although an example computing system has been described in FIG. 7, the subject matter including the operations described in this specification can be implemented in other types of digital electronic circuitry, or in computer software, firmware, or hardware, including the structures disclosed in this specification and their structural equivalents, or in combinations of one or more of them.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining can be stationary (e.g., permanent or fixed) or moveable (e.g., removable or releasable). Such joining can be achieved with the two members coupled directly to each other, with the two members coupled to each other using one or more separate intervening members, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling can be mechanical, electrical, or fluidic. For example, circuit A communicably "coupled" to circuit B can signify that the circuit A communicates directly with circuit B (i.e., no intermediary) or communicates indirectly with circuit B (e.g., through one or more intermediaries).

References herein to the positions of elements (e.g., "top," "bottom," "above," "below") are merely used to describe the orientation of various elements in the FIGURES. It should be noted that the orientation of various elements can differ according to other exemplary embodiments, and that such variations are intended to be encompassed by the present disclosure.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the vehicle 100 as shown in the various exemplary embodiments is illustrative only. Additionally, any element disclosed in one embodiment may be incorporated or utilized with any other embodiment disclosed herein. Although only one example of an element from one embodiment that can be incorporated or utilized in another embodiment has been described above, it should be appreciated that other elements of the various embodiments may be incorporated or utilized with any of the other embodiments disclosed herein.

## Claims

1. A method for energy control comprising:
receiving an operating point of an energy conversion device at a telematics interface of a data processing system, the telematics interface configured to receive information from the energy conversion device;
generating, by the data processing system, a digital twin of the energy conversion device, the digital twin having a virtual operating point;
predicting, by the data processing system, a future load associated with the energy conversion device;
modeling a predicted response to the future load based on the digital twin, the predicted response corresponding to the virtual operating point; and
conveying, to the energy conversion device via the telematics interface, an adjustment to the operating point of the energy conversion device based on the predicted response to the future load.

2. The method of claim 1, wherein the energy conversion device comprises a generator set and the method further comprises:
detecting, by the data processing system, a deviation between the operating point of the generator set and the virtual operating point; and
updating the digital twin of the generator set based on the deviation.

3. The method of claim 2, further comprising:
identifying, based on the deviation, a degraded operation of the generator set;
determining, by the data processing system, an intervention associated with the degraded operation; and
conveying, by the data processing system, a message indicative of the intervention.

4. The method of claim 3, further comprising:
initiating, based on the message indicative of the intervention, an action to automatically resolve the degraded operation.

5. The method of any of claim 1-4, wherein the method further comprises:
receiving, from the telematics interface, additional operating points of each of a plurality of additional energy sources comprising at least one energy storage device; and
adjusting the operating point of the energy conversion device based on the additional operating points of the plurality of additional energy sources, the adjustment comprising engaging or disengaging the energy conversion device.

6. The method of claim 5, wherein the digital twin of the energy conversion device models a fuel use thereof, and the adjustment to the operating point is configured to reduce a fuel use of the plurality of additional energy sources.

7. The method of any of claims 1 to 6, wherein the digital twin of the energy conversion device includes a wear prediction for the energy conversion device, and the adjustment to the operating point is configured to extend an operating life of the energy conversion device.

8. The method of any of claims 1 to 7, wherein the adjustment to the operating point of the energy conversion device comprises:
adjusting a power factor of a generator set.

9. The method of any of claims 1 to 8, wherein the operating point comprises a voltage, frequency, and total power output of a generator set.

10. The method of any of claims 1 to 9, wherein the method further comprises:
presenting an indication of the adjustment to the operating point of the energy conversion device; and
receiving, upon the presentation, an indication to apply the adjustment, wherein the adjustment to the operating point is conveyed responsive to receiving the indication to apply the adjustment.

11. A data processing system configured to interface with a generator set, the data processing system comprising:
a telematics interface configured to:
receive operating point data from a generator set; and
convey an adjustment to the operating point of the generator set; and
processing circuitry configured to generate and store a digital twin configured to:
generate first virtual operating point data based the operating point data received from the telematics interface;
receive a load prediction for a load associated with the generator set;
model a generator set transfer function corresponding to the generator set and the load prediction; and
generate second virtual operating point data based on the generator set transfer function, the data processing system configured to determine the adjustment to the operating point of the generator set responsive to the second virtual operating point data.

12. The data processing system of claim 11, wherein:
the telematics interface is configured to receive additional operating point data from an additional generator set; and
the processing circuitry is configured to generate and store an additional digital twin corresponding to the additional generator set, the additional digital twin configured to:
receive the load prediction;
model an additional generator set transfer function corresponding to the additional generator set and the load prediction; and
generate additional virtual operating point data based on the additional generator set transfer function, wherein the adjustment is based on the additional virtual operating point data.

13. The data processing system of claims 11 or 12 wherein the adjustment comprises an engagement or disengagement of the generator set.

14. The data processing system of any of claims 11 to 13, wherein:
the second virtual operating point data comprises a voltage, a frequency, and a power factor; and
the adjustment comprises a change to the power factor.

15. A controller comprising:
a telematics interface;
processing circuity; and
a memory storing instructions that, when executed by the processing circuity coupled to an energy conversion device, causes the processing circuity to perform operations comprising the method steps of any of claims 1 to 10.
